# EUROPEAN PATENT APPLICATION

(11) **EP 4 122 939 A1**
(43) Date of publication of application: **25.01.2023**
(21) Application number: 21771121.7
(22) Date of filing: 02.02.2021
(51) Int. Cl.: C07F 7/18, C08G 18/32, C08G 18/38

(54) **ORGAOPOLYSILOXANE AND CURABLE COMPOSITION CONTAINING SAME**

(30) Priority: 19.03.2020 JP 2020049134
(71) Applicant: SHIN-ETSU CHEMICAL CO., LTD., Tokyo 1000005 (JP)
(72) Inventor: YAMADA Tetsuro, Annaka-shi, Gunma 379-0224 (JP); HIROKAMI Munenao, Annaka-shi, Gunma 379-0224 (JP)
(74) Representative: Mewburn Ellis LLP
(86) International application number: PCT/JP2021/003696
(87) International publication number: WO 2021/186922

(57) **Abstract**

This organopolysiloxane which has a constituent unit represented by general formula (1) and a group represented by general formula (2), said group being directly bonded to a silicon atom, enables a curable composition containing a polyisocyanate compound to achieve a good balance between fast curing properties and storage stability, and enables the achievement of a cured product that has excellent hardness, heat resistance and wet heat resistance. 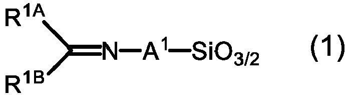 (In formula (1), each of R^{1A} and R^{1B} independently represents a hydrogen atom, an alkyl group having from 1 to 10 carbon atoms, or an aryl group having from 6 to 10 carbon atoms; and A¹ represents an unsubstituted or substituted divalent hydrocarbon group having from 1 to 20 carbon atoms and optionally having a hetero atom.)

R²O- (2)

(In formula (2), R² represents a hydrogen atom, an unsubstituted or substituted alkyl group having from 1 to 10 carbon atoms, or an unsubstituted or substituted aryl group having from 6 to 10 carbon atoms.)

## Description

### TECHNICAL FIELD

This invention relates to an organopolysiloxane and a curable composition containing the same; and more particularly, to an organopolysiloxane having specific constituent units and an alkoxysilyl group and/or silanol group in the molecule and a curable composition containing the same.

### BACKGROUND ART

Curable compositions comprising polyisocyanate compounds serve as urethane-based resin compositions and find use in a wide variety of applications such as adhesives, sealants, paints, and coating agents. Particularly in urethane-based resin compositions of two pack type, polyol and polyamine compounds are utilized as the curing agent for crosslinking and curing polyisocyanate or urethane prepolymer as a main component (see Patent Document 1, for example).

The compounds having active hydrogen such as polyol and polyamine compounds, however, are known to have inferior storage stability because there arises the problem that when they are mixed with polyisocyanate or urethane prepolymers having an isocyanate group at the molecular chain end, or during storage after mixing, the composition builds up its viscosity or cures prior to use. Another problem is that the composition is inefficient to work because of a short pot-life.

The urethane-based resin compositions containing polyisocyanate compounds also have the problem that they are degraded in adhesion after water resistance and wet heat tests because the chemical bond between resin and adherend is a weak hydrogen bond.

Further, the urethane-based resin compositions containing polyisocyanate compounds often suffer the problem of noticeable yellowing or whitening after heat resistance or wet heat test because the polyol or polyamine compounds used as the curing agent are low heat resistant or hydrophilic.

It is thus desired to improve the storage stability of curable compositions containing polyisocyanate compounds, and to improve the adhesion, heat resistance and moisture resistance of cured products thereof.

### PRIOR ART DOCUMENTS

### PATENT DOCUMENTS

Patent Document 1: JP-A 2007-031483

### SUMMARY OF INVENTION

### TECHNICAL PROBLEM

An object of the invention, which has been made under the above-mentioned circumstances, is to provide an organopolysiloxane which is combined with a polyisocyanate compound to formulate a curable composition meeting both fast cure and storage stability, the composition curing into a cured product having improved hardness, heat resistance and wet heat resistance.

### SOLUTION TO PROBLEM

Making extensive investigations to solve the outstanding problems, the inventors have found that an organopolysiloxane having an imine structure and an alkoxysilyl and/or silanol group in the molecule ensures that a curable composition comprising the organopolysiloxane and a polyisocyanate compound meets both fast cure and storage stability, the composition curing into a cured product having satisfactory hardness, heat resistance and moisture resistance. The invention is predicated on this finding.

The invention is as defined below.
1. An organopolysiloxane comprising constituent units having the general formula (1) and containing a group having the general formula (2), the group being directly bonded to silicon, 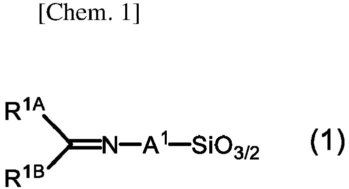 wherein R^{1A} and R^{1B} are each independently hydrogen, a C₁-C₁₀ alkyl group or C₆-C₁₀ aryl group, A¹ is an unsubstituted or substituted C₁-C₂₀ divalent hydrocarbon group which may contain a heteroatom,
   [Chem. 2]

   R²O- (2)

   wherein R² is hydrogen, an unsubstituted or substituted C₁-C₁₀ alkyl group, or an unsubstituted or substituted C₆-C₁₀ aryl group.
2. The organopolysiloxane of 1, having the average structural formula (3): 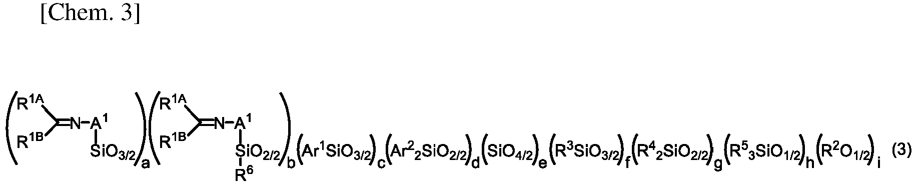 wherein R^{1A}, R^{1B}, R² and A¹ are as defined above, Ar¹ and Ar² are each independently a C₆-C₁₀ aryl group, R³, R⁴, R⁵ and R⁶ are each independently a monovalent organic group, a, b, c, d, e, f, g, h, and i are numbers in the range: a > 0, b ≥ 0, c ≥ 0, d ≥ 0, e ≥ 0, f ≥ 0, g ≥ 0, h ≥ 0, and i > 0.
3. The organopolysiloxane of 2 wherein c is a number in the range: c > 0.
4. The organopolysiloxane of 3, having the average structural formula (4): 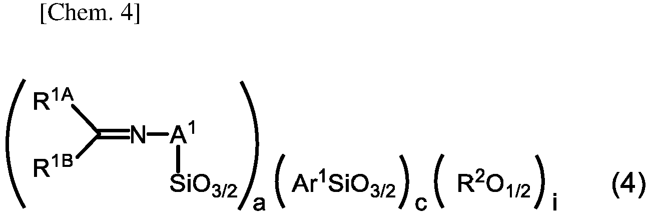 wherein R^{1A}, R^{1B}, R², A¹, Ar¹, a, c, and i are as defined above.
5. A curable composition comprising (A) the organopolysiloxane of any one of 1 to 4 and (B) a polyisocyanate compound.
6. A method of preparing the organopolysiloxane of any one of 1 to 4, comprising the steps of reacting an alkoxysilane containing an amino-containing alkoxysilane having the general formula (5), a hydrolytic condensate thereof, or both with a carbonyl compound having the general formula (6) and letting hydrolysis and condensation take place with the aid of water resulting from the reaction.

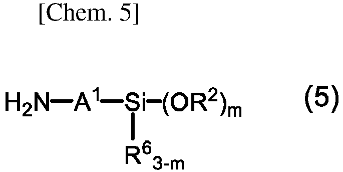

Herein R², R⁶ and A¹ are as defined above, m is a number of 2 to 3.

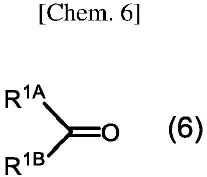

Herein R^{1A} and R^{1B} are as defined above.

7. A method of preparing the organopolysiloxane of any one of 1 to 4, comprising the steps of reacting a co-hydrolytic condensate of an amino-containing alkoxysilane having the general formula (5) with an alkoxysilane having the general formula (7), with a carbonyl compound having the general formula (6) and letting hydrolysis and condensation take place with the aid of water resulting from the reaction.

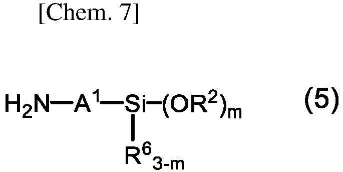

Herein R², R⁶ and A¹ are as defined above, m is a number of 2 to 3.
[Chem. 8]

**Ar¹-Si(OR²)₃** **(7)**

Herein Ar¹ and R² are as defined above.

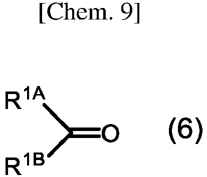

Herein R^{1A} and R^{1B} are as defined above.

### ADVANTAGEOUS EFFECTS OF INVENTION

As compared with the polyol and polyamine compounds which are used in the prior art as the curing agent for polyisocyanate compounds, the organopolysiloxane containing constituent units having an imine structure in the molecule and having an alkoxysilyl and/or silanol group ensures that a curable composition comprising the organopolysiloxane and a polyisocyanate compound meets both fast cure and storage stability, the composition curing into a cured product having satisfactory hardness, heat resistance and moisture resistance.

The inventive composition containing the organopolysiloxane having such properties is advantageously used as a curable composition for forming such agents as paints and coating agents.

### DESCRIPTION OF EMBODIMENTS

Now the invention is described in detail.

The invention provides an organopolysiloxane comprising constituent units having the general formula (1) and containing a group having the general formula (2), the group being directly bonded to silicon.

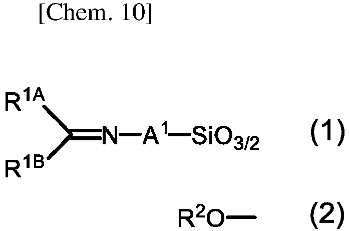

In formula (1), R^{1A} and R^{1B} are each independently hydrogen, a C₁-C₁₀ alkyl group or C₆-C₁₀ aryl group.

The C₁-C₁₀ alkyl group may be straight, cyclic or branched and examples thereof include methyl, ethyl, n-propyl, isopropyl, n-butyl, isobutyl, s-butyl, t-butyl, n-pentyl, neopentyl, n-hexyl, n-heptyl, n-octyl, n-nonyl, n-decyl, cyclopropyl, cyclobutyl, cyclopentyl, cyclohexyl, cycloheptyl, and cyclooctyl.

Examples of the C₆-C₁₀ aryl group include phenyl, α-naphthyl, and β-naphthyl.

Of these, from the standpoints of cure and storage stability, R^{1A} is preferably hydrogen or straight alkyl, more preferably hydrogen, methyl or ethyl, even more preferably hydrogen or methyl.

R^{1B} is preferably C₁-C₆ alkyl or phenyl, more preferably methyl, ethyl, n-propyl, n-butyl, isobutyl or phenyl, even more preferably phenyl or isobutyl.

The preferred combination of R^{1A} with R^{1B} is a combination of methyl with isobutyl or a combination of hydrogen with phenyl.

A¹ is an unsubstituted or substituted C₁-C₂₀ divalent hydrocarbon group which may contain a heteroatom.

Examples of the C₁-C₂₀ divalent hydrocarbon group A¹ include alkylene groups such as methylene, ethylene, trimethylene, propylene, isopropylene, tetramethylene, isobutylene, pentamethylene, hexamethylene, heptamethylene, octamethylene, nonamethylene, decamethylene, undecamethylene, dodecamethylene, tridecamethylene, tetradecamethylene, pentadecamethylene, hexadecamethylene, heptadecamethylene, octadecamethylene, nonadecamethylene, and eicosadecylene; cycloalkylene groups such as cyclopentylene and cyclohexylene; and arylene groups such as phenylene, α-naphthylene, and β-naphthylene.

These groups may contain a heteroatom such as O, S or NH in their molecular chain, or another divalent linking group containing a heteroatom.

Examples of the other divalent linking group containing a heteroatom include sulfonyl bond (-S(=O)₂-), phosphonyl bond (-P(=O)OH-), oxo bond (-C(=O)-), thiooxo bond (-C(=S)-), ester bond (-C(=O)O-), thioester bond (-C(=O)S-), thionoester bond (-C(=S)O-), dithioester bond (-C(=S)S-), carbonate ester bond (-OC(=O)O-), thiocarbonate ester bond (-OC(=S)O-), amide bond (-C(=O)NH-), thioamide bond (-C(=S)NH-), urethane bond (-OC(=O)NH-), thiourethane bond (-SC(=O)NH-), thionourethane bond (-OC(=S)NH-), dithiourethane bond (-SC(=S)NH-), urea bond (-NHC(=O)NH-), and thiourea bond (-NHC(=S)NH-).

Of these, trimethylene and octamethylene are preferred, with trimethylene being most preferred.

In formula (2), R² is hydrogen, an unsubstituted or substituted C₁-C₁₀ alkyl group, or an unsubstituted or substituted C₆-C₁₀ aryl group.

The C₁-C₁₀ alkyl group R² may be straight, cyclic or branched, with straight alkyl groups being preferred.

Examples thereof include methyl, ethyl, n-propyl, n-butyl, n-pentyl, n-hexyl, n-heptyl, n-octyl, n-nonyl, and n-decyl. Inter alia, methyl, ethyl, n-propyl, n-hexyl, and n-octyl are preferred, methyl and ethyl are more preferred, with methyl being most preferred.

Examples of the C₆-C₁₀ aryl group include phenyl, α-naphthyl, and β-naphthyl, with phenyl being preferred.

From the standpoint of cure, R² is preferably hydrogen or a C₁-C₃ alkyl group.

The organopolysiloxane is not particularly limited as long as it has constituent units having the general formula (1) and a group having the general formula (2) in direct bond to a silicon atom. The organopolysiloxane may have a linear, branched or crosslinked structure composed of organopolysiloxane skeleton.

More specifically, the organopolysiloxane preferably has the average structural formula (3). Using such a compound, better fast cure, storage stability, hardness, heat resistance, and moisture resistance are exerted.

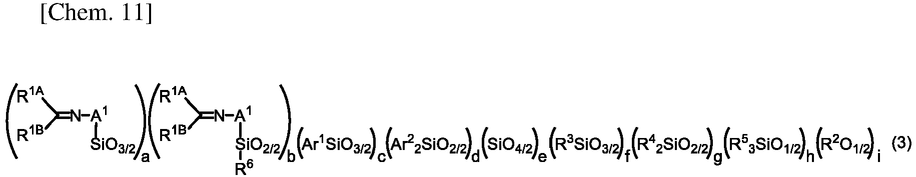

Herein, R^{1A}, R^{1B}, R² and A¹ are as defined above.

In formula (3), Ar¹ and Ar² are each independently a C₆-C₁₀ aryl group.

The C₆-C₁₀ aryl group is not particularly limited, and examples thereof are as exemplified above for the C₆-C₁₀ aryl groups R^{1A} and R^{1B} in formula (1), with phenyl being preferred.

R³, R⁴, R⁵ and R⁶ are each independently a monovalent organic group. The monovalent organic group is not particularly limited, and examples thereof are as exemplified above for the C₁-C₁₀ alkyl groups and C₆-C₁₀ aryl groups represented by R^{1A} and R^{1B} in formula (1).

In these alkyl and aryl groups, some or all of the hydrogen atoms may be substituted by substituent groups. Suitable substituent groups include halogen atoms, alkenyl groups such as vinyl, glycidyl type epoxy groups, alicyclic epoxy groups, thiirane groups, (meth)acryloyloxy groups, mercapto groups, iso(thio)cyanate groups, succinic anhydride groups, amino groups, ethylenediamine groups, perfluoroalkyl groups, polyether groups such as polyoxyethylene, and perfluoropolyether groups.

Further, R³, R⁴, R⁵ and R⁶ may be monovalent organic groups of two or more different types. In this embodiment, the content of groups is arbitrary, and is not particularly limited as long as the total of fractional contents of monovalent organic groups of two or more different types is unity (1).

R³ and R⁴ may be arbitrarily selected from the foregoing variety of monovalent organic groups and may have arbitrary fractional contents, for example, R³ consists of 0.5 of alkyl group and 0.5 of aryl group, and R⁴ consists of 0.2 of alkyl group and 0.8 of glycidyl type epoxy group-containing alkyl group.

Of the foregoing groups, it is preferred from the standpoints of cure and storage stability that R³, R⁴, R⁵ and R⁶ be unsubstituted C₁-C₁₀ alkyl groups, more preferably unsubstituted C₁-C₃ alkyl groups.

In formula (3), a, b, c, d, e, f, g, h, and i are numbers in the range: a > 0, b ≥ 0, c ≥ 0, d ≥ 0, e ≥ 0, f ≥ 0, g ≥ 0, h ≥ 0, and i > 0. It is preferred from the standpoints of cure and storage stability that these subscripts are numbers in the range: 1,000 ≥ a > 0, 1,000 ≥ b ≥ 0, 1,000 ≥ c ≥ 0, 1,000 ≥ d ≥ 0, 500 ≥ e ≥ 0, 1,000 ≥ f ≥ 0, 1,000 ≥ g ≥ 0, 100 ≥ h ≥ 0, and 1,000 ≥ i > 0; more preferably 500 ≥ a > 0, 500 ≥ b ≥ 0, 500 ≥ c > 0, 500 ≥ d ≥ 0, 100 ≥ e ≥ 0, 500 ≥ f ≥ 0, 500 ≥ g ≥ 0, 50 ≥ h ≥ 0, and 500 ≥ i > 0; even more preferably 500 ≥ a > 0, b = 0, 500 ≥ c > 0, d = 0, e = 0, f = 0, g = 0, h = 0, and 500 ≥ i > 0.

Accordingly, the organopolysiloxane preferably has the average structural formula (4). Using such a compound, further better fast cure, storage stability, hardness, heat resistance, and moisture resistance are exerted.

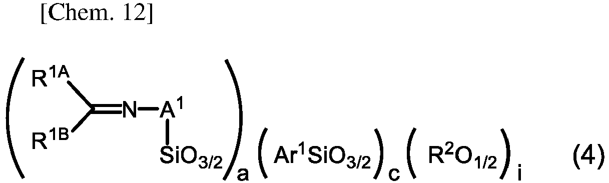

Herein, R^{1A}, R^{1B}, R², A¹, Ar¹, a, and i are as defined above, and c is a number: c > 0.

While the weight average molecular weight (Mw) of the organopolysiloxane is not particularly limited, it is preferred from the standpoint of providing a cured product obtained by curing a curable composition comprising the organopolysiloxane, with satisfactory fast cure, storage stability, hardness, heat resistance and moisture resistance that Mw is 200 to 100,000, more preferably 300 to 10,000, even more preferably 400 to 5,000, further preferably 500 to 3,000. Notably, Mw is measured by gel permeation chromatography (GPC) versus polystyrene standards.

The organopolysiloxane may be prepared by a first method comprising the steps of mixing an amino-containing alkoxysilane having the general formula (5), referred to as aminosilane (5), hereinafter, with an optional component selected from various alkoxysilanes having the structural formulae (7), (8), (9), (10), (11), and (12), referred to as alkoxysilane (7), (8), (9), (10), (11), or (12), hereinafter, reacting the silane(s) with a carbonyl compound having the structural formula (6), referred to as carbonyl compound (6), hereinafter, and letting hydrolysis and condensation take place with the aid of water resulting from the reaction, for conducting copolymerization.

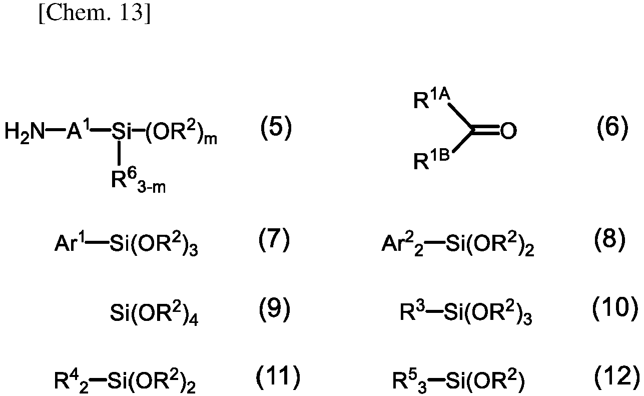

Herein R^{1A}, R^{1B}, R² to R⁶, Ar¹, Ar², and A¹ are as defined above, and m is a number of 2 to 3.

The organopolysiloxane may also be prepared by a second method comprising the steps of letting hydrolysis and condensation of the aminosilane (5) and the alkoxysilane (7), (8), (9), (10), (11) or (12) as an optional component take place for conducting copolymerization, reacting the product with the carbonyl compound (6), and letting further hydrolysis and condensation take place with the aid of water resulting from the reaction, for conducting copolymerization.

Examples of the aminosilane (5) include N-2-(aminoethyl)aminomethyltrimethoxysilane, N-2-(aminoethyl)aminomethyltriethoxysilane, N-2-(aminoethyl)aminomethyldimethoxymethylsilane, N-2-(aminoethyl)aminomethyldiethoxymethylsilane, N-2-(aminoethyl)-3-aminopropyltrimethoxysilane, N-2-(aminoethyl)-3-aminopropyltriethoxysilane, N-2-(aminoethyl)-3-aminopropyldimethoxymethylsilane, N-2-(aminoethyl)-3-aminopropyldiethoxymethylsilane, N-2-(aminoethyl)-8-aminooctyltrimethoxysilane, N-2-(aminoethyl)-8-aminooctyltriethoxysilane, N-2-(aminoethyl)-8-aminooctyldimethoxymethylsilane, N-2-(aminoethyl)-8-aminooctyldiethoxymethylsilane, aminomethyltrimethoxysilane, aminomethyltriethoxysilane, aminomethyldimethoxymethylsilane, aminomethyldiethoxymethylsilane, 3-aminopropyltrimethoxysilane, 3-aminopropyltriethoxysilane, 3-aminopropyldimethoxymethylsilane, 3-aminopropyldiethoxymethylsilane, 8-aminooctyltrimethoxysilane, 8-aminooctyltriethoxysilane, 8-aminooctyldimethoxymethylsilane, and 8-aminooctyldiethoxymethylsilane. Inter alia, 3-aminopropyltrimethoxysilane and 3-aminopropyltriethoxysilane are preferred in view of fast cure, storage stability, hardness, heat resistance and moisture resistance of the organopolysiloxane obtained therefrom.

Examples of the alkoxysilane (7) as the optional component include phenyltrimethoxysilane, naphthyltrimethoxysilane, phenyltriethoxysilane, and naphthyltriethoxysilane.

Inter alia, phenyltrimethoxysilane and phenyltriethoxysilane are preferred as the alkoxysilane (7), with phenyltrimethoxysilane being more preferred.

Examples of the alkoxysilane (8) as the optional component include diphenyldimethoxysilane, diphenyldiethoxysilane, dinaphthyldimethoxysilane, and dinaphthyldiethoxysilane.

Inter alia, diphenyldimethoxysilane is preferred as the alkoxysilane (8).

Examples of the alkoxysilane (9) as the optional component include tetramethoxysilane, tetraethoxysilane, tetrapropoxysilane, tetraisopropoxysilane, tetrabutoxysilane, and tetraoctoxysilane.

Examples of the alkoxysilane (10) as the optional component include methyltrimethoxysilane, propyltrimethoxysilane, hexyltrimethoxysilane, octyltrimethoxysilane, decyltrimethoxysilane, phenyltrimethoxysilane, naphthyltrimethoxysilane, vinyltrimethoxysilane, allyltrimethoxysilane, hexenyltrimethoxysilane, octenyltrimethoxysilane, methyltriethoxysilane, propyltriethoxysilane, hexyltriethoxysilane, octyltriethoxysilane, decyltriethoxysilane, phenyltriethoxysilane, naphthyltriethoxysilane, vinyltriethoxysilane, allyltriethoxysilane, hexenyltriethoxysilane, octenyltriethoxysilane, 2-(3,4-epoxycyclohexyl)ethyltrimethoxysilane, 2-(3,4-epoxycyclohexyl)ethyltriethoxysilane, 3-glycidoxypropyltrimethoxysilane, 3-glycidoxypropyltriethoxysilane, 8-glycidoxyoctyltrimethoxysilane, 8-glycidoxyoctyltriethoxysilane, p-styryltrimethoxysilane, p-styryltriethoxysilane, methacryloxymethyltrimethoxysilane, methacryloxymethyltriethoxysilane, 3-methacryloxypropyltrimethoxysilane, 3-methacryloxypropyltriethoxysilane, 8-methacryloxyoctyltrimethoxysilane, 8-methacryloxyoctyltriethoxysilane, acryloxymethyltrimethoxysilane, acryloxymethyltriethoxysilane, 3-acryloxypropyltrimethoxysilane, 3-acryloxypropyltriethoxysilane, 8-acryloxyoctyltrimethoxysilane, 8-acryloxyoctyltriethoxysilane, N-2-(aminoethyl)-aminomethyltrimethoxysilane, N-2-(aminoethyl)aminomethyltriethoxysilane, N-2-(aminoethyl)-3-aminopropyltrimethoxysilane, N-2-(aminoethyl)-3-aminopropyltriethoxysilane, N-2-(aminoethyl)-8-aminooctyltrimethoxysilane, N-2-(aminoethyl)-8-aminooctyltriethoxysilane, aminomethyltrimethoxysilane, aminomethyltriethoxysilane, 3-aminopropyltrimethoxysilane, 3-aminopropyltriethoxysilane, 8-aminooctyltrimethoxysilane, 8-aminooctyltriethoxysilane, N-phenyl-aminomethyltrimethoxysilane, N-phenyl-aminoethyltrimethoxysilane, N-phenyl-3-aminopropyltrimethoxysilane, N-phenyl-3-aminopropyltriethoxysilane, N-phenyl-8-aminooctyltrimethoxysilane, N-phenyl-8-aminooctyltriethoxysilane, 3-isocyanatopropyltrimethoxysilane, 3-isocyanatopropyltriethoxysilane, mercaptomethyltrimethoxysilane, mercaptomethyltriethoxysilane, 3-mercaptopropyltrimethoxysilane, 3-mercaptopropyltriethoxysilane, 8-mercaptooctyltrimethoxysilane, 8-mercaptooctyltriethoxysilane, 3-trimethoxysilylpropylsuccinic anhydride, 3-triethoxysilylpropylsuccinic anhydride, chloromethyltrimethoxysilane, chloromethyltriethoxysilane, 3-chloropropyltrimethoxysilane, 3-chloropropyltriethoxysilane, 8-chlorooctyltrimethoxysilane, 8-chlorooctyltriethoxysilane, trifluoropropyltrimethoxysilane, nonafluorohexyltrimethoxysilane, tridecafluorooctyltrimethoxysilane, polyethylene glycol methyl-3-trimethoxysilylpropyl ether, polyethylene glycol methyl-3-triethoxysilylpropyl ether, polypropylene glycol methyl-3-trimethoxysilylpropyl ether, and polypropylene glycol methyl-3-triethoxysilylpropyl ether.

Inter alia, methyltrimethoxysilane, methyltriethoxysilane, and vinyltrimethoxysilane are preferred as the alkoxysilane (10), with methyltrimethoxysilane and methyltriethoxysilane being more preferred.

Examples of the alkoxysilane (11) as the optional component include dimethyldimethoxysilane, dimethyldiethoxysilane, methylphenyldimethoxysilane, methylphenyldiethoxysilane, diphenyldimethoxysilane, diphenyldiethoxysilane, methylvinyldimethoxysilane, methylvinyldiethoxysilane, octenylmethyldimethoxysilane, 2-(3,4-epoxycyclohexyl)ethylmethyldimethoxysilane, 3-glycidoxypropylmethyldimethoxysilane, 3-glycidoxypropylmethyldiethoxysilane, 3-methacryloxypropylmethyldimethoxysilane, 3-methacryloxypropylmethyldiethoxysilane, 3-acryloxypropylmethyldimethoxysilane, N-2-(aminoethyl)-3-aminopropylmethyldimethoxysilane, N-2-(aminoethyl)-3-aminopropylmethyldiethoxysilane, 3-aminopropylmethyldimethoxysilane, 3-aminopropylmethyldiethoxysilane, 3-mercaptopropylmethyldimethoxysilane, 3-mercaptopropylmethyldiethoxysilane, 3-chloropropylmethyldimethoxysilane, and 3-chloropropylmethyldiethoxysilane.

Inter alia, dimethyldimethoxysilane, dimethyldiethoxysilane, methylvinyldimethoxysilane, and methylvinyldiethoxysilane are preferred as the alkoxysilane (11), with dimethyldimethoxysilane and dimethyldiethoxysilane being more preferred.

Examples of the alkoxysilane (12) as the optional component include trimethylmethoxysilane, trimethylethoxysilane, vinyldimethylmethoxysilane, 3-methacryloxypropyldimethylmethoxysilane, 3-methacryloxypropyldimethylethoxysilane, 3-acryloxypropyldimethylmethoxysilane, 3-acryloxypropyldimethylethoxysilane, N-(2-(aminoethyl)-3-aminopropyldimethylmethoxysilane, and N-(2-(aminoethyl)-3-aminopropyldimethylethoxysilane, with trimethylmethoxysilane being preferred.

It is unnecessary in the first method that hydrolysis and condensation of aminosilane (5) with optional alkoxysilane (7), (8), (9), (10), (11) or (12) take place in advance of the addition of carbonyl compound (6) whereas it is necessary in the second method that hydrolysis and condensation of aminosilane (5) with optional alkoxysilane (7), (8), (9), (10), (11) or (12) take place to conduct copolymerization in advance of the addition of carbonyl compound (6).

Although the copolymerization due to hydrolysis and condensation of aminosilane (5) with optional alkoxysilanes (7) to (12) is typically conducted in a solventless system, it is acceptable to conduct the copolymerization in an organic solvent which dissolves all of aminosilane and alkoxysilanes used in the reaction. Examples of the organic solvent include methanol, ethanol, isopropyl alcohol, butanol, propylene glycol monomethyl ether, pentane, hexane, cyclohexane, heptane, isooctane, toluene and xylene. It is noted that the alcohol resulting from hydrolysis or condensation reaction of alkoxysilyl groups is not included in the organic solvent.

When used, the amount of the organic solvent is not particularly limited. Typically, the organic solvent is preferably used in an amount of up to 20 parts by weight, more preferably 0.5 to 10 parts by weight, even more preferably 1 to 5 parts by weight per part by weight in total of the aminosilane (5) and optional alkoxysilanes (7) to (12).

In the second method, the copolymerization due to hydrolysis and condensation is conducted by adding dropwise or pouring water to a mixture or solution of the aminosilane and alkoxysilane. In this step, preferably an acid or base which can act as a catalyst for the hydrolysis reaction is not used, that is, the system is kept catalyst-free, although it is acceptable to add dropwise or pour an acid or base which can act as a catalyst for the hydrolysis reaction, if necessary. In the latter case, an aqueous solution of the acid or base may be added dropwise.

While the acid is not particularly limited, examples of the acid include hydrochloric acid, sulfuric acid, nitric acid, acetic acid, formic acid, phosphoric acid, p-toluenesulfonic acid and hydrate thereof, methanesulfonic acid, trifluoromethanesulfonic acid, and cation-exchange resins. Inter alia, hydrochloric acid, methanesulfonic acid, and cation-exchange resins are preferred, with hydrochloric acid and cation-exchange resins being more preferred, and cation-exchange resins being most preferred.

Often the amount of the acid used is preferably 0.001 to 1 mole, more preferably 0.01 to 0.2 mole per mole in total of aminosilane (5) and optional alkoxysilanes (7) to (12).

While the base is not particularly limited, examples of the base include sodium hydroxide, potassium hydroxide, lithium hydroxide, sodium acetate, potassium acetate, lithium acetate, sodium carbonate, sodium hydrogencarbonate, sodium methoxide, sodium ethoxide, potassium methoxide, potassium ethoxide, potassium tert-butoxide, triethylamine, and anion-exchange resins. Inter alia, sodium hydroxide, potassium hydroxide, and sodium acetate are preferred, with sodium acetate being more preferred.

Often the amount of the base used is preferably 0.001 to 1 mole, more preferably 0.01 to 0.2 mole per mole in total of aminosilane (5) and optional alkoxysilanes (7) to (12).

In the second method, the amount of water used in the copolymerization due to hydrolysis and condensation is preferably 0.05 to 100 moles, more preferably 0.1 to 10 moles, even more preferably 0.2 to 2.0 moles per mole in total of aminosilane (5) and optional alkoxysilanes (7) to (12).

In the second method, the reaction temperature for the copolymerization due to hydrolysis and condensation of aminosilane (5) and optional alkoxysilanes (7) to (12), though not particularly limited, is typically 0 to 150°C, preferably 20 to 120°C, more preferably 40 to 100°C, even more preferably 50 to 80°C.

The reaction time is typically at least 1 hour, preferably 2 to 72 hours.

In view of fast cure, storage stability, hardness, heat resistance and moisture resistance of the resulting organopolysiloxane, the second method wherein hydrolysis and condensation of aminosilane (5) with optional alkoxysilanes (7) to (12) takes place in advance is preferable to the first method wherein hydrolysis and condensation of aminosilane (5) with optional alkoxysilanes (7) to (12) does not take place in advance.

The organopolysiloxane of the invention may be prepared by reacting a mixture of aminosilane (5) and optional alkoxysilane (7) to (12) and/or the hydrolytic condensate of aminosilane (5) with optional alkoxysilanes (7) to (12), obtained from the first or second method, with carbonyl compound (6) and letting hydrolysis and condensation take place with the aid of water formed by the reaction, for thereby conducting copolymerization.

Specifically, dehydrating condensation of the amino group originating from aminosilane (5) with the carbonyl group of carbonyl compound (6) takes place to form an imine structure, and the water formed during the dehydrating condensation promotes hydrolysis and condensation of the alkoxysilyl group.

Examples of the carbonyl compound (6) include acetone, methyl ethyl ketone, methyl isobutyl ketone, acetaldehyde, propionaldehyde, and benzaldehyde. In view of fast cure, storage stability, and hardness of the resulting organopolysiloxane, methyl ethyl ketone, methyl isobutyl ketone, and benzaldehyde are preferred, with methyl ethyl ketone and methyl isobutyl ketone being more preferred, methyl isobutyl ketone being most preferred.

Although the dehydrating condensation reaction of the amino group originating from aminosilane (5) with the carbonyl group of carbonyl compound (6) is often performed in a solventless system, it is acceptable to perform the reaction in the presence of an organic solvent which dissolves all of aminosilane, alkoxysilanes, and carbonyl compound used in reaction. Examples of the organic solvent include methanol, ethanol, isopropyl alcohol, butanol, propylene glycol monomethyl ether, pentane, hexane, cyclohexane, heptane, isooctane, toluene and xylene. It is noted that the alcohol resulting from hydrolysis or condensation reaction of alkoxysilyl groups is not included in the organic solvent.

When used, the amount of the organic solvent is not particularly limited. Typically, the organic solvent is preferably used in an amount of up to 20 parts by weight, more preferably 0.5 to 10 parts by weight, even more preferably 1 to 5 parts by weight per part by weight in total of aminosilane (5), optional alkoxysilanes (7) to (12), and carbonyl compound (6).

Although the dehydrating condensation reaction of the amino group originating from aminosilane (5) with the carbonyl group of carbonyl compound (6) is often performed in a catalyst-free system, i.e., without using an acid or base which can act as a catalyst for dehydrating condensation reaction, it is acceptable that an acid or base which can act as a catalyst for hydrolytic reaction is added dropwise or poured, if necessary.

Examples of the acid or base are as exemplified above, and the amount of the acid or base used is also as described above.

In the dehydrating condensation reaction of the amino group originating from aminosilane (5) with the carbonyl group of carbonyl compound (6), the amount of carbonyl compound (6) used is preferably 0.5 to 10 moles, more preferably 0.8 to 5 moles, even more preferably 1.0 to 2.0 moles per mole in total of aminosilane (5).

Also, the reaction temperature for the dehydrating condensation reaction, though not particularly limited, is typically 0 to 150°C, preferably 20 to 120°C, more preferably 40 to 100°C, even more preferably 50 to 80°C. The reaction time is typically at least 1 hour, preferably 2 to 72 hours.

While the temperature at which the reaction mixture resulting from the dehydrating condensation reaction is concentrated is not particularly limited, the temperature is typically 10 to 150°C, preferably 60 to 120°C.

While the pressure during concentration is not particularly limited, the pressure may be either atmospheric or subatmospheric.

The stoichiometric ratio of aminosilane (5) to optional alkoxysilane (7) to (12) is not particularly limited. In view of fast cure, storage stability, hardness, heat resistance, and moisture resistance of the resulting organopolysiloxane, it is preferred to use 0 to 1,000 moles of alkoxysilane (7), 0 to 1,000 moles of alkoxysilane (8), 0 to 1,000 moles of alkoxysilane (9), 0 to 1,000 moles of alkoxysilane (10), 0 to 1,000 moles of alkoxysilane (11), and 0 to 1,000 moles of alkoxysilane (12) per mole of aminosilane (5); more preferably 0.001 to 100 moles of alkoxysilane (7), 0 to 100 moles of alkoxysilane (8), 0 to 100 moles of alkoxysilane (9), 0 to 100 moles of alkoxysilane (10), 0 to 100 moles of alkoxysilane (11), and 0 to 100 moles of alkoxysilane (12) per mole of aminosilane (5); even more preferably 0.01 to 50 moles of alkoxysilane (7), 0 mole of alkoxysilane (8), 0 mole of alkoxysilane (9), 0 mole of alkoxysilane (10), 0 mole of alkoxysilane (11), and 0 mole of alkoxysilane (12) per mole of amino silane (5).

Understandably, the organopolysiloxane of the invention is preferably prepared by subjecting aminosilane (5) and alkoxysilane (7) to hydrolysis and condensation for copolymerization, reacting the product with carbonyl compound (6), and carrying on hydrolysis and condensation with the aid of water formed in the reaction. The compound obtained from this method exerts better fast cure, storage stability, hardness, heat resistance, and moisture resistance.

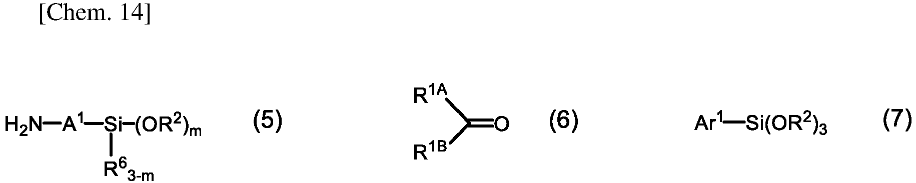

Herein, R², R⁶, A¹, m, R^{1A}, R^{1B}, and Ar¹ are as defined above.

Another embodiment of the invention is a curable composition comprising at least (A) the organopolysiloxane defined above and (B) a polyisocyanate compound.

Since the curable composition contains the organopolysiloxane defined above as a potential amine curing agent for the polyisocyanate compound, the fast cure and storage stability of the curable composition and the hardness, heat resistance and moisture resistance of a cured product obtained by curing the curable composition are improved over conventional compositions using polyol or polyamine compounds as the curing agent. Such improvements are outstanding when a solid substrate is coated with the curable composition and owing to the structure of the inventive organopolysiloxane.

That is, an amino group (-NH₂ group) formed as a result of the imine structure of the inventive organopolysiloxane being deprotected with airborne moisture reacts with a NCO group in the polyisocyanate compound to form a urea bond. Also, a hydrolyzable silyl group (Si-OR group) is hydrolyzed with airborne moisture into a silanol group (Si-OH group), which in turn reacts with a OH group that a solid substrate like glass possesses to form a Si-O-Si linkage, or the inventive organopolysiloxane undergoes self-condensation to form a Si-O-Si linkage. This allows the curable composition to meet both fast cure and storage stability, and provides a cured product thereof with hardness, heat resistance and moisture resistance.

In the composition, the amount of the organopolysiloxane is preferably 0.01 to 1,000,000 parts by weight per 100 parts by weight of the polyisocyanate compound as the main component. In view of fast cure, storage stability, hardness, heat resistance, and moisture resistance, the amount of the organopolysiloxane is more preferably 0.1 to 10,000 parts by weight, even more preferably 1 to 1,000 parts by weight.

The polyisocyanate compound (B) is not particularly limited as long as it has at least two isocyanate groups in the molecule. Examples include aromatic polyisocyanates such as tolylene 2,4-diisocyanate (2,4-TDI), tolylene 2,6-diisocyanate (2,6-TDI), 4,4'-diphenylmethane diisocyanate (4,4'-MDI), 2,2'-diphenylmethane diisocyanate (2,2'-MDI), 2,4'-diphenylmethane diisocyanate (2,4'-MDI), 1,4-phenylene diisocyanate, polymethylene polyphenylene polyisocyanate, tolidine diisocyanate (TODI), 1,5-naphthalene diisocyanate (NDI), xylylene diisocyanate (XDI), tetramethylxylylene diisocyanate (TMXDI), and triphenylmethane triisocyanate; aliphatic polyisocyanates such as hexamethylene diisocyanate (HDI), trimethylhexamethylene diisocyanate (TMHDI), lysine diisocyanate, and norbornane diisocyanate (NBDI); alicyclic polyisocyanates such as transcyclohexane-1,4-diisocyanate, isophorone diisocyanate (IPDI), bis(isocyanatomethyl)cyclohexane (H₆XDI), and dicyclohexylmethane diisocyanate (H₁₂MDI); polyisocyanate compounds such as polymethylene polyphenylene polyisocyanate; carbodiimide-modified polyisocyanates of the foregoing isocyanate compounds; isocyanurate-modified polyisocyanates of the foregoing isocyanate compounds; and urethane prepolymers obtained from reaction of the foregoing isocyanate compounds with polyol compounds to be described later. These polyisocyanate compounds may be used alone or in combination of two or more.

The polyisocyanate compound (B) may also be a urethane prepolymer which is obtained from reaction of the foregoing isocyanate compound with a polyol compound.

While the polyol compound is not particularly limited, it may be selected as appropriate from prior art well-known polyol compounds such as polyether polyols, polyester polyols, acrylic polyols, and polycarbonate polyols. These polyol compounds may be used alone or in combination of two or more.

Exemplary polyol compounds include polypropylene ether diol, polyethylene ether diol, polypropylene ether triol, polytetramethylene glycol, polyethylene glycol (PEG), polypropylene glycol (PPG), polyoxyethylene glycol, polyoxypropylene glycol, polyoxypropylene triol, polyoxybutylene glycol, polytetramethylene ether glycol (PTMG), polymer polyol, poly(ethylene adipate), poly(diethylene adipate), poly(propylene adipate), polytetramethylene adipate), poly(hexamethylene adipate), poly(neopentylene adipate), poly-ε-caprolactone, and poly(hexamethylene carbonate), as well as natural polyol compounds such as castor oil.

It is noted that the urethane prepolymer may be obtained by reacting a polyol having at least 2 hydroxy (OH) groups with a polyisocyanate compound having at least 2 isocyanate (NCO) groups in such amounts that the isocyanate groups are in excess, that is, the NCO/OH molar ratio is greater than 1.

The reaction conditions include a NCO/OH equivalent ratio of 2.0 to 15.0, more preferably 2.0 to 8.0, a nitrogen or dry air stream, 70 to 100°C, and a few hours. The resulting NCO-containing prepolymer preferably has a NCO content of 5 to 25% by weight.

In addition to the foregoing components, any of various additives may be added to the curable composition of the invention depending on an intended application, for example, curing catalysts, tackifiers, physical property modifiers, fillers, plasticizers, thixotropic agents, dehydrating agents (or storage stability improvers), pressure-sensitive adhesive aids, anti-sagging agents, UV-absorbers, photo stabilizers, antioxidants, flame retardants, pigments, coloring agents, and radical polymerization initiators.

The filler is not particularly limited. Suitable fillers include inorganic fillers such as calcium carbonate, aluminum hydroxide, carbon black, white carbon, silica, glass, kaolin, talc (magnesium silicate), fumed silica, precipitated silica, silicic anhydride, hydrous silicic acid, clay, fired clay, bentonite, glass fibers, asbestos, glass filaments, ground quartz, diatomaceous earth, aluminum silicate, zinc oxide, magnesium oxide, titanium oxide, and surface-treated products of the foregoing; organic fillers such as carbonates, organic bentonite, high styrene resins, coumarone-indene resins, phenolic resins, formaldehyde resins, modified melamine resins, cyclized rubber, lignin, ebonite powder, shellac, cork powder, bone powder, wood powder, cellulose powder, coconut shell, and wood pulp; inorganic pigments such as lamp black, titanium white, red iron oxide, titanium yellow, zinc white, red lead, cobalt blue, iron black, and aluminum powder; and organic pigments such as Neozabon Black RE, Neoblack RE, Orazole Black CN, and Orazole Black Ba (all available from Ciba-Geigy), Spiron Blue 2BH (Hodogaya Chemical Co., Ltd.).

The fillers may be used alone or in combination of two or more. The amount of the filler blended is preferably 0.1 to 100 parts by weight, more preferably 1 to 70 parts by weight per 100 parts by weight of the curable composition.

Of these fillers, at least one selected from carbon black and calcium carbonate is preferably used.

The carbon black and calcium carbonate are not particularly limited and any of commercially available products may be used. For example, carbon black species designated N110, N220, N330, N550, and N770 according to the ASTM Standards and mixtures thereof are useful, and suitable calcium carbonate species include heavy calcium carbonate and precipitated calcium carbonate.

The curing catalyst used in the curable composition is to promote the reaction of an amino group (-NH₂ group) resulting from deprotection with a NCO group in the polyisocyanate compound, and condensation reaction following hydrolysis of a hydrolyzable silyl group (Si-OR group) with a solid substrate, or self-condensation of organopolysiloxane molecules, and to promote cure of the curable composition. The catalyst is added for efficient cure if necessary.

Although the amount of the curing catalyst added is not particularly limited, the amount is preferably 0.01 to 10 parts by weight, more preferably 0.05 to 5 parts by weight, even more preferably 0.1 to 2 parts by weight per 100 parts by weight of the curable composition when the formation of a cured coating having desired physical properties (hardness, heat resistance and moisture resistance) by adjusting the cure speed and storage stability to appropriate ranges, an improvement in the working efficiency upon coating, and the economy associated with the addition of the catalyst are taken into account.

The curing catalyst is not particularly limited as long as it is used in the curing of conventional urethane-based resin compositions or moisture condensation curable compositions. Examples include divalent organic tin compounds such as tin octanoate, tin octylate, tin butanoate, tin naphthenate, tin caprylate, tin oleate, and tin laurate; alkyl tin compounds such as dibutyltin oxide and dioctyltin oxide; alkyl tin ester compounds such as dibutyltin diacetate, dibutyltin dilaurate, dioctyltin dilaurate, dibutyltin dioctoate, dioctyltin dioctoate, dibutyltin dimaleate, dibutyltin distearate, dibutyltin dioleate, dibutyltin benzoate, dibutyltin diversatate, diphenyltin diacetate, and dibutyltin dimethoxide; tetravalent organic tin compounds such as dibutyltin bis(triethoxysilicate) and the reaction products of dibutyltin oxide with phthalates; titanates such as tetraethoxytitanium, tetraisopropoxytitanium, tetra-n-butoxytitanium, tetra-t-butoxytitanium, tetrakis(2-ethylhexoxy)titanium, dipropoxybis(acetylacetonato)titanium, titanium diisopropoxybis(ethyl acetoacetate), titanium isopropoxyoctylene glycol, and titanium chelate compounds and partial hydrolysates thereof; aluminum chelate compounds such as zinc naphthenate, zinc stearate, zinc 2-ethyloctoate, iron 2-ethylhexoate, cobalt 2-ethylhexoate, manganese 2-ethylhexoate, cobalt naphthenate, aluminum trihydroxide, aluminum alcolates, aluminum acylate, salts of aluminum acylate, aluminosiloxy compounds, di-n-butoxy(ethyl acetoacetate)aluminum, and organic metal compounds such as bismuth octylate; primary amines such as butylamine, hexylamine, octylamine, dodecylamine, oleylamine, cyclohexylamine, and benzylamine; secondary amines such as dibutylamine; tertiary amines such as triethylamine, tributylamine and dimethylbenzylamine; polyamines such as diethylene triamine, triethylene tetramine, guanidine, tetramethylguanidine, diphenylguanidine, and xylylenediamine; cyclic amines such as triethylenediamine and derivatives thereof, 2-methyltriethylenediamine, morpholine, N-methylmorpholine, 2-ethyl-4-methylimidazole, 1,8-diazabicyclo[5.4.0]-7-undecene; aminoalcohol compounds such as monoethanolamine, diethanolamine, and triethanolamine; amine compounds such as aminophenol compounds, e.g., 2,4,6-tris(dimethylaminomethyl)phenol, and carboxylic salts thereof; dialkylhydroxylamines such as dimethylhydroxylamine and diethylhydroxylamine; quaternary ammonium salts such as benzyltriethylammonium acetate; low-molecular-weight amide resins obtained from an excess of polyamine and polybasic acid; reaction products of an excess of polyamine with epoxy compounds; alkali metal salts of low fatty acids such as potassium acetate, sodium acetate, and lithium oxalate; aminoalkyl-substituted alkoxysilanes such as 3-aminopropyltrimethoxysilane, 3-aminopropyltriethoxysilane, 3-aminopropylmethyldimethoxysilane, 3-aminopropylmethyldiethoxysilane, N-(β-aminoethyl)-γ-aminopropyltrimethoxysilane, N-(β-aminoethyl)-γ-aminopropyltriethoxysilane, N-(β-aminoethyl)-γ-aminopropylmethyldimethoxysilane, N-(β-aminoethyl)-γ-aminopropylmethyldiethoxysilane, bis[3-(trimethoxysilyl)propyl]amine, bis[3-(triethoxysilyl)propyl]amine, N,N'-bis[3-(trimethoxysilyl)propyl]ethane-1,2-diamine, N,N'-bis[3-(triethoxysilyl)propyl]ethane-1,2-diamine, and N-phenyl-3-aminopropyltrimethoxysilane; guanidyl-containing silanes and siloxanes such as tetramethylguanidylpropyltrimethoxysilane, tetramethylguanidylpropylmethyldimethoxysilane, tetramethylguanidylpropyltriethoxysilane, tetramethylguanidylpropylmethyldiethoxysilane, and tetramethylguanidylpropyltris(trimethylsiloxy)silane; and phosphazene base-containing silanes and siloxanes such as N,N,N',N',N",N"-hexamethyl-N'"-[3-(trimethoxysilyl)propyl]-phosphorimidic triamide. These compounds may be used alone or in combination of two or more.

Inter alia, dioctyltin dilaurate, dioctyltin diversatate, tetraisopropoxytitanium, tetra-n-butoxytitanium, tetra-t-butoxytitanium, titanium diisopropoxybis(ethyl acetoacetate), and di-n-butoxy(ethyl acetoacetate)aluminum are preferred because of higher reactivity; dioctyltin dilaurate, dioctyltin diversatate, tetra-n-butoxytitanium, tetra-t-butoxytitanium, and di-n-butoxy(ethyl acetoacetate)aluminum are more preferred in view of cure of the composition; tetra-n-butoxytitanium and tetra-t-butoxytitanium are even more preferred because the composition becomes free of organotin compounds and less toxic.

The curable composition is preferably of solventless type, that is, substantially free of organic solvents (most of which are harmful to the human body and combustible), whereas a solvent may be added to the composition prior to use in a particular application or in view of ease of working.

As used herein, the term "substantially free" means that the content of a solvent in the curable composition is up to 1% by weight, especially up to 0.1% by weight.

Examples of the solvent which can be used herein are the same as exemplified for the organic solvent used in the preparation of organopolysiloxane (A).

Notably, the solvent encompasses those solvents other than the solvents which are intentionally added to the curable composition, for example, the reaction solvent which has not been completely removed by vacuum distillation.

The curable composition defined above is coated onto the surface of a solid substrate and cured to form a coating layer, obtaining a coated solid substrate or cured article.

While the coating technique is not particularly limited, any of well-known techniques such as spray coating, spin coating, dip coating, roller coating, brush coating, bar coating and flow coating may be selected and used.

While the solid substrate is not particularly limited, suitable substrates include organic polymer substrates, for example, epoxy resins, phenolic resins, polycarbonates and polycarbonate blends, acrylic resins such as poly(methyl methacrylate), polyester resins such as poly(ethylene terephthalate), poly(butylene terephthalate), and unsaturated polyester resins, polyamide resins, polyimide resins, acrylonitrile-styrene copolymers, styrene-acrylonitrile-butadiene copolymers, polyvinyl chloride resins, polystyrene resins, blends of polystyrene and polyphenylene ether, cellulose acetate butyrate, and polyethylene resins; metal substrates, for example, steel plates, paint-coated surfaces, glass, ceramics, concrete, slate, textiles, wood, stone, tile, inorganic fillers such as (hollow) silica, titania, zirconia and alumina, fiber glass products such as glass fibers, glass cloth, glass tape, glass mat, and glass paper. While the material and shape of the substrate are not particularly limited, the curable composition is advantageously used in coating of steel plates and glass.

When the curable composition of the invention comes in contact with moisture in the ambient atmosphere, various reactions as mentioned above take place, that is, curing reaction starts. The index of moisture in the atmosphere may be any value in the range of 10 to 100% RH, with airborne moisture being sufficient. Since the desired reaction generally takes place more quickly at higher moisture, water may be added to the atmosphere if desired.

The temperature and time of curing reaction vary with many factors including substrate material, moisture content, catalyst concentration, and type of hydrolyzable group. Typical conditions include a temperature not higher than the heat-resisting temperature of the substrate used and a time of about 1 minute to about 1 week.

Since the curable composition effectively cures at normal temperature so that a coating loses tack on its surface in a few hours, the composition has ease of working even when room-temperature-cure is essential as in the case of in-situ application. However, heat treatment is acceptable as long as the temperature is not higher than the heat-resisting temperature of the substrate.

### EXAMPLES

Examples and Comparative Examples are given below for further illustrating the invention although the invention is not limited thereto.

Herein, the viscosity of a product is measured at 25°C by an Ostwald viscometer. The molecular weight is a weight average molecular weight (Mw) as measured versus polystyrene standards by a gel permeation chromatograph (GPC analyzer by Tosoh Corp.) using tetrahydrofuran elute and an RI detector.

The average composition of silicone is computed from integration values of detected ¹H- and ²⁹Si-NMR spectra by means of a 300-MHz NMR spectrometer (JEOL Co., Ltd.).

The content (% by weight) of silanolic hydroxy group in each product is quantitated from the amount of methane gas evolved when Grignard reagent (methylmagnesium iodide) is added to the product.

### [1] Synthesis of organopolysiloxane

### [Example 1-1] Synthesis of Organopolysiloxane 1

A 500-ml separable flask equipped with a stirrer, reflux condenser, dropping funnel and thermometer was charged with 179 g (1.00 mol) of 3-aminopropyltrimethoxysilane. With stirring at 25°C, 3.6 g (0.20 mol) of deionized water was added dropwise, followed by hydrolytic condensation at 60°C for 2 hours. Then, 110 g (1.10 mol) of methyl isobutyl ketone was added dropwise, followed by hydrolytic condensation at 60°C for 2 hours. The reaction mixture was heated at 120°C at atmospheric pressure to distil off methanol by-product and the excess methyl isobutyl ketone. This was followed by concentration under reduced pressure and filtration, obtaining Organopolysiloxane 1 (amount 205 g). Organopolysiloxane 1 was a colorless transparent liquid represented by the following average structural formula and having a viscosity of 220 mm²/s, a Mw of 1,340, and a silanolic hydroxy content of 0.6 wt%.

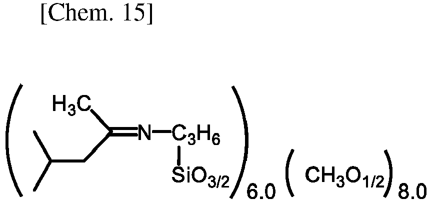

### [Example 1-2] Synthesis of Organopolysiloxane 2

A 500-ml separable flask equipped with a stirrer, reflux condenser, dropping funnel and thermometer was charged with 179 g (1.00 mol) of 3-aminopropyltrimethoxysilane. With stirring at 25°C, 116.5 g (1.10 mol) of benzaldehyde was added dropwise, followed by hydrolytic condensation at 60°C for 2 hours. The reaction mixture was heated at 120°C at atmospheric pressure to distil off methanol by-product and the excess benzaldehyde. This was followed by concentration under reduced pressure and filtration, obtaining Organopolysiloxane 2 (amount 220 g). Organopolysiloxane 2 was a yellow transparent liquid represented by the following average structural formula and having a viscosity of 470 mm²/s, a Mw of 1,790, and a silanolic hydroxy content of 0 wt%.

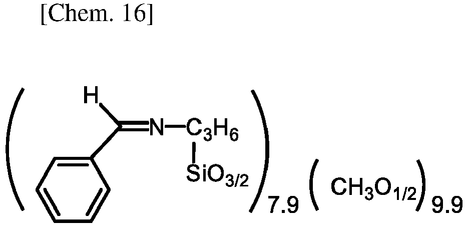

### [Example 1-3] Synthesis of Organopolysiloxane 3

A 500-ml separable flask equipped with a stirrer, reflux condenser, dropping funnel and thermometer was charged with 89.6 g (0.50 mol) of 3-aminopropyltrimethoxysilane and 99.1 g (0.50 mol) of phenyltrimethoxysilane. With stirring at 25°C, 10.8 g (0.60 mol) of deionized water was added dropwise, followed by hydrolytic condensation at 60°C for 2 hours. Then, 60.0 g (0.60 mol) of methyl isobutyl ketone was added dropwise, followed by hydrolytic condensation at 60°C for 2 hours. The reaction mixture was heated at 120°C at atmospheric pressure to distil off methanol by-product and the excess methyl isobutyl ketone. This was followed by concentration under reduced pressure and filtration, obtaining Organopolysiloxane 3 (amount 180 g). Organopolysiloxane 3 was a colorless transparent liquid represented by the following average structural formula and having a viscosity of 500 mm²/s, a Mw of 1,570, and a silanolic hydroxy content of 0 wt%.

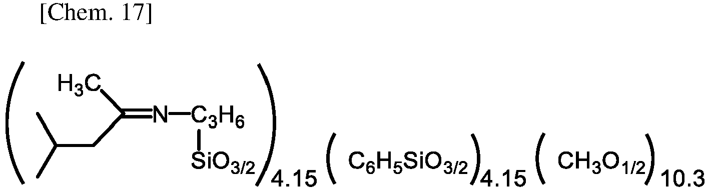

### [Example 1-4] Synthesis of Organopolysiloxane 4

Organopolysiloxane 4 (amount 175 g) was obtained by the same procedure as Example 1-3 aside from changing the amount of deionized water to 12.6 g (0.70 mol). Organopolysiloxane 4 was a colorless transparent liquid represented by the following average structural formula and having a viscosity of 3,160 mm²/s, a Mw of 2,800, and a silanolic hydroxy content of 0.4 wt%.

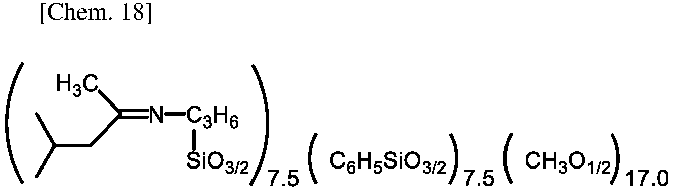

### [Example 1-5] Synthesis of Organopolysiloxane 5

Organopolysiloxane 5 (amount 185 g) was obtained by the same procedure as Example 1-3 aside from changing the amount of deionized water to 9.0 g (0.50 mol). Organopolysiloxane 5 was a colorless transparent liquid represented by the following average structural formula and having a viscosity of 140 mm²/s, a Mw of 780, and a silanolic hydroxy content of 0.1 wt%.

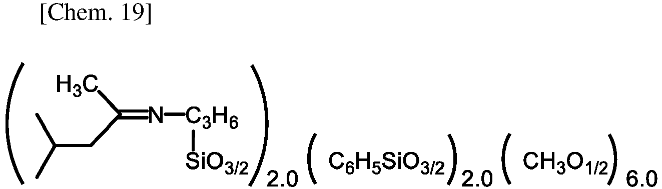

### [Example 1-6] Synthesis of Organopolysiloxane 6

A 500-ml separable flask equipped with a stirrer, reflux condenser, dropping funnel and thermometer was charged with 161.4 g (0.90 mol) of 3-aminopropyltrimethoxysilane and 19.8 g (0.10 mol) of phenyltrimethoxysilane. With stirring at 25°C, 3.6 g (0.20 mol) of deionized water was added dropwise, followed by hydrolytic condensation at 60°C for 2 hours. Then, 108.2 g (1.08 mol) of methyl isobutyl ketone was added dropwise, followed by hydrolytic condensation at 60°C for 2 hours. The reaction mixture was heated at 120°C at atmospheric pressure to distil off methanol by-product and the excess methyl isobutyl ketone. This was followed by concentration under reduced pressure and filtration, obtaining Organopolysiloxane 6 (amount 210 g). Organopolysiloxane 6 was a colorless transparent liquid represented by the following average structural formula and having a viscosity of 280 mm²/s, a Mw of 2,140, and a silanolic hydroxy content of 0.2 wt%.

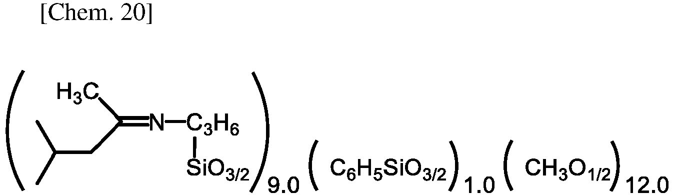

### [Example 1-7] Synthesis of Organopolysiloxane 7

A 500-ml separable flask equipped with a stirrer, reflux condenser, dropping funnel and thermometer was charged with 17.9 g (0.10 mol) of 3-aminopropyltrimethoxysilane and 178.6 g (0.90 mol) of phenyltrimethoxysilane. With stirring at 25°C, 18.0 g (1.00 mol) of deionized water was added dropwise, followed by hydrolytic condensation at 60°C for 2 hours. Then, 12.0 g (0.12 mol) of methyl isobutyl ketone was added dropwise, followed by hydrolytic condensation at 60°C for 2 hours. The reaction mixture was heated at 120°C at atmospheric pressure to distil off methanol by-product and the excess methyl isobutyl ketone. This was followed by concentration under reduced pressure and filtration, obtaining Organopolysiloxane 7 (amount 150 g). Organopolysiloxane 7 was a colorless transparent liquid represented by the following average structural formula and having a viscosity of 1,750 mm²/s, a Mw of 1,630, and a silanolic hydroxy content of 0.5 wt%.

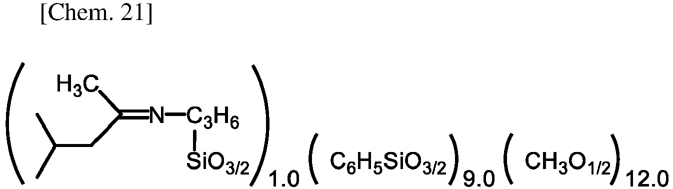

### [Example 1-8] Synthesis of Organopolysiloxane 8

Organopolysiloxane 8 (amount 185 g) was obtained by the same procedure as Example 1-3 aside from changing 89.6 g (0.50 mol) of 3-aminopropyltrimethoxysilane to 110.7 g (0.50 mol) of 3-aminopropyltriethoxysilane. Organopolysiloxane 8 was a colorless transparent liquid represented by the following average structural formula and having a viscosity of 390 mm²/s, a Mw of 1,760, and a silanolic hydroxy content of 0 wt%.

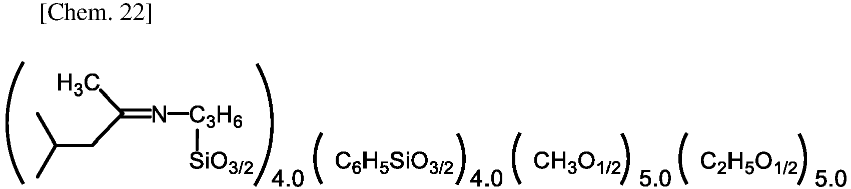

### [Example 1-9] Synthesis of Organopolysiloxane 9

Organopolysiloxane 9 (amount 170 g) was obtained by the same procedure as Example 1-3 aside from changing 89.6 g (0.50 mol) of 3-aminopropyltrimethoxysilane to 81.6 g (0.50 mol) of 3-aminopropyldimethoxymethylsilane. Organopolysiloxane 9 was a colorless transparent liquid represented by the following average structural formula and having a viscosity of 320 mm²/s, a Mw of 1,450, and a silanolic hydroxy content of 0.2 wt%.

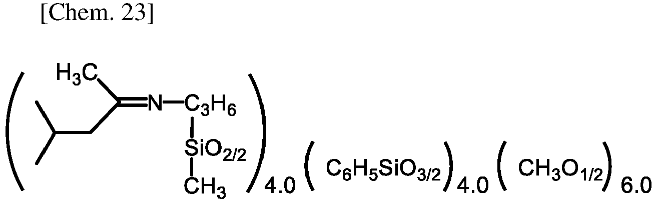

### [Example 1-10] Synthesis of Organopolysiloxane 10

Organopolysiloxane 10 (amount 165 g) was obtained by the same procedure as Example 1-3 aside from changing 60.0 g (0.60 mol) of methyl isobutyl ketone to 43.3 g (0.60 mol) of methyl ethyl ketone. Organopolysiloxane 10 was a colorless transparent liquid represented by the following average structural formula and having a viscosity of 550 mm²/s, a Mw of 1,400, and a silanolic hydroxy content of 0 wt%.

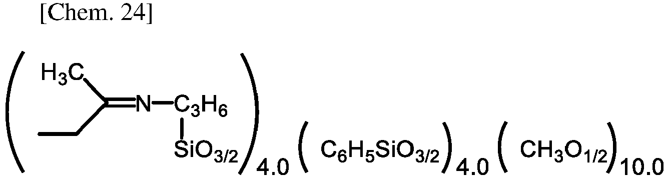

### [Example 1-11] Synthesis of Organopolysiloxane 11

Organopolysiloxane 11 (amount 150 g) was obtained by the same procedure as Example 1-3 aside from changing 99.1 g (0.50 mol) of phenyltrimethoxysilane to 68.1 g (0.50 mol) of methyltrimethoxysilane. Organopolysiloxane 11 was a colorless transparent liquid represented by the following average structural formula and having a viscosity of 600 mm²/s, a Mw of 1,270, and a silanolic hydroxy content of 0 wt%.

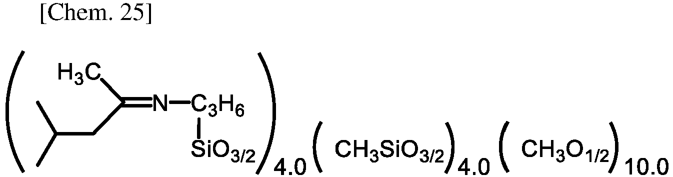

### [Example 1-12] Synthesis of Organopolysiloxane 12

Organopolysiloxane 12 (amount 145 g) was obtained by the same procedure as Example 1-3 aside from changing 99.1 g (0.50 mol) of phenyltrimethoxysilane to 60.1 g (0.50 mol) of dimethyldimethoxysilane. Organopolysiloxane 12 was a colorless transparent liquid represented by the following average structural formula and having a viscosity of 210 mm²/s, a Mw of 1,200, and a silanolic hydroxy content of 0.2 wt%.

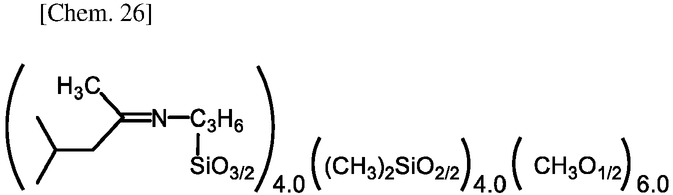

### [Example 1-13] Synthesis of Organopolysiloxane 13

Organopolysiloxane 13 (amount 200 g) was obtained by the same procedure as Example 1-3 aside from changing 99.1 g (0.50 mol) of phenyltrimethoxysilane to 122.2 g (0.50 mol) of diphenyldimethoxysilane. Organopolysiloxane 13 was a colorless transparent liquid represented by the following average structural formula and having a viscosity of 300 mm²/s, a Mw of 1,700, and a silanolic hydroxy content of 0.7 wt%.

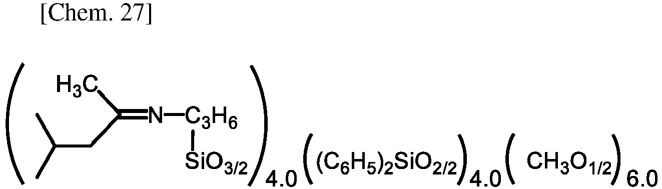

### [Example 1-14] Synthesis of Organopolysiloxane 14

Organopolysiloxane 14 (amount 160 g) was obtained by the same procedure as Example 1-3 aside from changing 99.1 g (0.50 mol) of phenyltrimethoxysilane to 76.1 g (0.50 mol) of tetramethoxysilane. Organopolysiloxane 14 was a colorless transparent liquid represented by the following average structural formula and having a viscosity of 1,000 mm²/s, a Mw of 1,330, and a silanolic hydroxy content of 0 wt%.

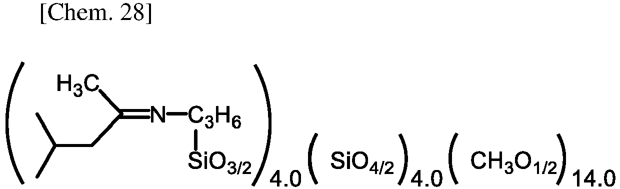

### [2] Synthesis of urethane prepolymer

### [Synthesis Example 2-1]

A flask was charged with 600 g of polypropylene ether triol having a Mw of 5,000 (G-5000, tradename EXCENOL 5030, by AGC Inc.) and 300 g of polypropylene ether diol having a Mw of 2,000 (D-2000, tradename EXCENOL 2020, by AGC Inc.), and heated at 100-130°C. With evacuating, the contents were stirred and dehydrated to a water content of 0.01 wt% or below.

After the flask was cooled down to 90°C, diphenylmethane diisocyanate (MDI, tradename Sumidur 44S, by Sumitomo Bayer Japan Co., Ltd.) was added in an amount of 138.6 g to give an equivalent ratio of NCO group/OH group (i.e., NCO mol/OH mol) of 1.70. The reaction was run in a nitrogen atmosphere for about 24 hours, yielding a urethane prepolymer.

### [3] Evaluation of storage stability of curable composition

### [Example 3-1]

A curable composition was prepared by mixing 100 parts by weight of polyisocyanate compound, Polymeric MDI (tradename Cosmonate M-200, Mitsui Chemical Co., Ltd.) and 5 parts by weight of Organopolysiloxane 1 obtained in Example 1-1 on a mixer until uniform.

### [Examples 3-2 to 3-14]

Curable compositions were prepared by the same procedure as Example 3-1 except that Organopolysiloxane 1 was replaced by Organopolysiloxanes 2 to 14 obtained in Examples 1-2 to 1-14, respectively.

### [Comparative Example 3-1]

A curable composition was prepared by the same procedure as Example 3-1 except that Organopolysiloxane 1 was replaced by tetraethylene pentamine (TEPA).

### [Comparative Example 3-2]

A curable composition was prepared by the same procedure as Example 3-1 except that Organopolysiloxane 1 was replaced by 3-triethoxysilyl-N-(1,3-dimethylbutylidene)propylamine (KBE-9103P, Shin-Etsu Chemical Co., Ltd.).

The curable compositions prepared in Examples 3-1 to 3-14 and Comparative Examples 3-1 and 3-2 were examined by the following tests. The results are shown in Tables 1 and 2.

### [Storage stability]

While the curable composition was stored at a constant temperature of 25°C, a change of viscosity was monitored. The viscosity is measured at 25°C by a Brookfield rotational viscometer. A smaller change of viscosity from the initial indicates better storage stability.

**[Table 1]**

| | | Example | | | | | | | | | |
|---|---|---|---|---|---|---|---|---|---|---|---|
| | | 3-1 | 3-2 | 3-3 | 3-4 | 3-5 | 3-6 | 3-7 | 3-8 | 3-9 | 3-10 |
| Organopolysiloxane | | 1 | 2 | 3 | 4 | 5 | 6 | 7 | 8 | 9 | 10 |
| Viscosity (mPa. s) | Initial | 200 | 210 | 220 | 350 | 200 | 205 | 280 | 210 | 205 | 220 |
| | After 1 day | 350 | 230 | 300 | 440 | 270 | 330 | 290 | 280 | 270 | 430 |
| | After 7 days | 520 | 250 | 410 | 600 | 370 | 500 | 300 | 390 | 350 | 580 |
| | After 14 days | 680 | 300 | 530 | 790 | 480 | 610 | 310 | 490 | 460 | 720 |

**[Table 2]**

| | | Example | | | | Comparative Example | |
|---|---|---|---|---|---|---|---|
| | | 3-11 | 3-12 | 3-13 | 3-14 | 3-1 | 3-2 |
| Organopolysiloxane | | 11 | 12 | 13 | 14 | TEPA | KBE-9103P |
| Viscosity (mPa. s) | Initial | 220 | 200 | 205 | 240 | Gelled after 1 hour | 190 |
| | After 1 day | 350 | 280 | 310 | 400 | | 940 |
| | After 7 days | 440 | 370 | 420 | 560 | | 1,200 |
| | After 14 days | 580 | 450 | 550 | 750 | | 1,500 |

It is evident from Tables 1 and 2 that Organopolysiloxanes 1 to 14 obtained in Examples 1-1 to 1-14 achieve superior storage stability when blended in polyisocyante compound.

In contrast, a blend of TEPA or KBE-9103P used in Comparative Examples 3-1 and 3-2 and polyisocyante compound gels in a short time or marks a large change of viscosity from the initial, both indicating poor storage stability.

### [4] Preparation of curable composition and cured coating

### [Example 4-1]

A curable composition was prepared by mixing 100 parts by weight of urethane prepolymer in Synthesis Example 2-1 as the polyisocyanate compound with 16 parts by weight of Organopolysiloxane 1 obtained in Example 1-1 on a mixer until uniform.

The curable composition was coated onto a glass plate in air at 25°C and 50% RH by means of a bar coater No. 5 and dried and cured in air at 25°C and 50% RH for 3 days, yielding a cured coating.

### [Examples 4-2 to 4-14]

Curable compositions and cured coatings were prepared by the same procedures as in Example 4-1 aside from changing Organopolysiloxane 1 to Organopolysiloxanes 2 to 14 in Examples 1-2 to 1-14.

### [Example 4-15]

A curable composition and cured coating were prepared by the same procedures as in Example 4-3 aside from using 2 parts by weight of tetra-n-butoxytitanium as the curing catalyst.

### [Example 4-16]

A curable composition and cured coating were prepared by the same procedures as in Example 4-15 aside from using 2 parts by weight of tetra-t-butoxytitanium as the curing catalyst instead of 2 parts by weight of tetra-n-butoxytitanium.

### [Example 4-17]

A curable composition and cured coating were prepared by the same procedures as in Example 4-15 aside from using 2 parts by weight of di-n-butoxy(ethyl acetoacetate)aluminum as the curing catalyst instead of 2 parts by weight of tetra-n-butoxytitanium.

### [Comparative Example 4-1]

A curable composition and cured coating were prepared by the same procedures as in Example 4-1 aside from changing Organopolysiloxane 1 to tetraethylenepentamine (TEPA).

### [Comparative Example 4-2]

A curable composition and cured coating were prepared by the same procedures as in Example 4-1 aside from changing Organopolysiloxane 1 to 3-triethoxysilyl-N-(1,3-dimethylbutylidene)propylamine (KBE-9103P by Shin-Etsu Chemical Co., Ltd.).

The cured coatings prepared in Examples 4-1 to 4-17 and Comparative Examples 4-1 and 4-2 were examined by the following tests. The results are shown in Tables 3 and 4.

### [Tacky-dry time]

A test specimen obtained by coating a glass plate with the curable composition by the above coating technique was allowed to stand in air at 25°C and 50% RH, during which period moisture curing made progress. A time taken until the coating becomes untacky to the finger when the finger is pressed against the coating surface is measured. A smaller value indicates better curability.

### [Pencil hardness]

A specimen of glass plate having a cured coating formed by the above coating technique was measured by the pencil scratch test according to JIS K5600-5-4 under a load of 750 g. A measured value is reported.

### [Cross-hatch adhesion (initial)]

A specimen of glass plate having a cured coating formed by the above coating technique was examined by the cross-hatch adhesion test according to JIS K5400, Section 6, 15, specifically by scribing a coating with a cutter knife along 6 longitudinal and 6 transverse lines at a spacing of 4 mm to define 25 square sections, tightly attaching pressure-sensitive tape to the coating, pulling back the tape, and counting the number of remaining sections. The count is reported.

### [Cross-hatch adhesion (after moisture resistant test)]

After a specimen of glass plate having a cured coating formed by the above coating technique was allowed to stand at 85°C and 85% RH for one week, it was examined by the same cross-hatch adhesion test as above, with the count being reported.

### [Heat resistance]

After a specimen of glass plate having a cured coating formed by the above coating technique was heat treated in an oven at 150°C for 6 hours, it was visually inspected for yellowing and whitening. The specimen was rated good, "○" in heat resistance when neither yellowing nor whitening was observed, and poor, "×" when significant yellowing or whitening was observed.

**[Table 3]**

| | | Example | | | | | | | | | |
|---|---|---|---|---|---|---|---|---|---|---|---|
| | | 4-1 | 4-2 | 4-3 | 4-4 | 4-5 | 4-6 | 4-7 | 4-8 | 4-9 | 4-10 |
| Organopolysiloxane | | 1 | 2 | 3 | 4 | 5 | 6 | 7 | 8 | 9 | 10 |
| Tacky-dry time | | 5 hr | 10 hr | 2 hr | 2 hr | 3 hr | 4 hr | 10 hr | 3 hr | 3 hr | 1 hr |
| Pencil hardness | | H | H | 2H | 3H | H | H | B | 2H | F | 2H |
| Cross-hatch adhesion | Initial | 25/25 | 25/25 | 25/25 | 25/25 | 25/25 | 25/25 | 25/25 | 25/25 | 25/25 | 25/25 |
| | After moisture resistance test | 25/25 | 25/25 | 25/25 | 25/25 | 25/25 | 25/25 | 25/25 | 25/25 | 25/25 | 25/25 |
| Heat resistance | | ○ | ○ | ○ | ○ | ○ | ○ | ○ | ○ | ○ | ○ |

**[Table 4]**

| | | Example | | | | | | | Comparative Example | |
|---|---|---|---|---|---|---|---|---|---|---|
| | | 4-11 | 4-12 | 4-13 | 4-14 | 4-15 | 4-16 | 4-17 | 4-1 | 4-2 |
| Organopolysiloxane | | 11 | 12 | 13 | 14 | 3 | 3 | 3 | TEPA | KBE-9103P |
| Tacky-dry time | | 7 hr | 10 hr | 5 hr | 4 hr | 2 hr | 2 hr | 2 hr | 15 hr | 24 hr |
| Pencil hardness | | HB | HB | H | H | 2H | 3H | 3H | 2B | 6B |
| Cross-hatch adhesion | Initial | 25/25 | 25/25 | 25/25 | 25/25 | 25/25 | 25/25 | 25/25 | 25/25 | 25/25 |
| | After moisture resistance test | 25/25 | 25/25 | 25/25 | 25/25 | 25/25 | 25/25 | 25/25 | 0/25 | 25/25 |
| Heat resistance | | ○ | ○ | ○ | ○ | ○ | ○ | ○ | × | × |

It is evident from Tables 3 and 4 that the cured coatings prepared in Examples 4-1 to 4-17 using Organopolysiloxanes 1 to 14 of Examples 1-1 to 1-14 are excellent in fast cure, hardness, heat resistance and moisture resistance as compared with the cured coatings prepared in Comparative Examples 4-1 and 4-2.

By contrast, the cured coatings prepared in Comparative Examples 4-1 and 4-2 are poor in fast cure, hardness, heat resistance and moisture resistance.

It has been demonstrated that the organopolysiloxane of the invention meets both fast cure and storage stability and forms a cured coating having excellent hardness, heat resistance and moisture resistance, which properties are difficult to acquire in the prior art.

## Claims

1. An organopolysiloxane comprising constituent units having the general formula (1) and containing a group having the general formula (2), the group being directly bonded to silicon, 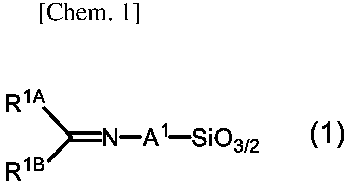 wherein R^{1A} and R^{1B} are each independently hydrogen, a C₁-C₁₀ alkyl group or C₆-C₁₀ aryl group, A¹ is an unsubstituted or substituted C₁-C₂₀ divalent hydrocarbon group which may contain a heteroatom,
[Chem. 2]
R²O- (2)
wherein R² is hydrogen, an unsubstituted or substituted C₁-C₁₀ alkyl group, or an unsubstituted or substituted C₆-C₁₀ aryl group.

2. The organopolysiloxane of claim 1, having the average structural formula (3): 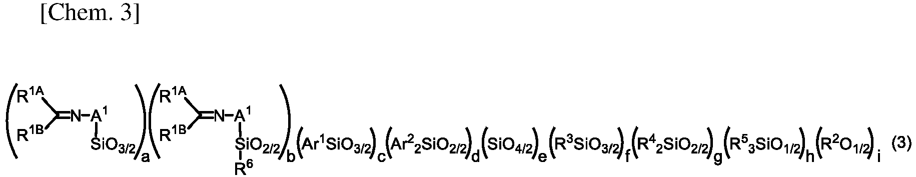 wherein R^{1A}, R^{1B}, R² and A¹ are as defined above, Ar¹ and Ar² are each independently a C₆-C₁₀ aryl group, R³, R⁴, R⁵ and R⁶ are each independently a monovalent organic group, a, b, c, d, e, f, g, h, and i are numbers in the range: a > 0, b ≥ 0, c ≥ 0, d ≥ 0, e ≥ 0, f ≥ 0, g ≥ 0, h ≥ 0, and i > 0.

3. The organopolysiloxane of claim 2 wherein c is a number in the range: c > 0.

4. The organopolysiloxane of claim 3, having the average structural formula (4): 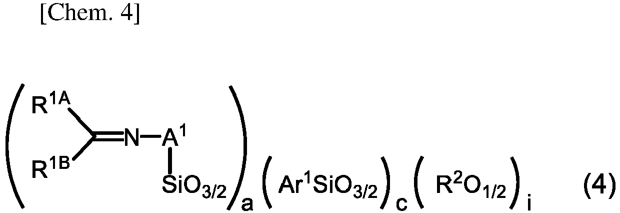 wherein R^{1A}, R^{1B}, R², A¹, Ar¹, a, c, and i are as defined above.

5. A curable composition comprising (A) the organopolysiloxane of any one of claims 1 to 4 and (B) a polyisocyanate compound.

6. A method of preparing the organopolysiloxane of any one of claims 1 to 4, comprising the steps of reacting an alkoxysilane containing an amino-containing alkoxysilane having the general formula (5), a hydrolytic condensate thereof, or both with a carbonyl compound having the general formula (6) and letting hydrolysis and condensation take place with the aid of water resulting from the reaction, 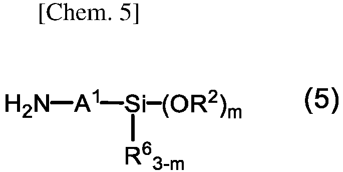 wherein R², R⁶ and A¹ are as defined above, m is a number of 2 to 3, 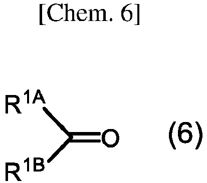 wherein R^{1A} and R^{1B} are as defined above.

7. A method of preparing the organopolysiloxane of any one of claims 1 to 4, comprising the steps of reacting a co-hydrolytic condensate of an amino-containing alkoxysilane having the general formula (5) with an alkoxysilane having the general formula (7), with a carbonyl compound having the general formula (6) and letting hydrolysis and condensation take place with the aid of water resulting from the reaction, 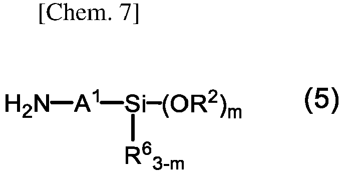 wherein R², R⁶ and A¹ are as defined above, m is a number of 2 to 3,
[Chem. 8]
**Ar¹-Si(OR²)₃** **(7)**
wherein Ar¹ and R² are as defined above, 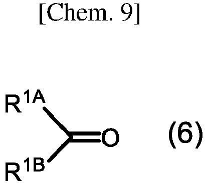 wherein R^{1A} and R^{1B} are as defined above.
